# FASCICULE DE BREVET EUROPEEN

(11) **EP 0 876 259 B1**
(45) Date de publication et mention de la délivrance du brevet: **20.10.1999**
(21) Numéro de dépôt: 97900901.6
(22) Date de dépôt: 21.01.1997
(51) Int. Cl.: B41M 1/30, B41M 7/00, B41M 5/00

(54) **FILM APTE A ETRE IMPRIME**
BEDRUCKBARE FOLIE
FILM APPROPRIATE FOR PRINTING

(30) Priorité: 25.01.1996 EP 96870004
(43) Date de publication de la demande: 11.11.1998
(73) Titulaire: UCB, S.A., 1070 Bruxelles (BE)
(72) Inventeur: SERVANTE, Alastair Hugh, Carlisle, Cumbria CA5 5AF (GB); POWER, Gary, Silloth, Cumbria CA5 DT (GB); MARSHALL, Colin, Wigton, Cumbria CA7 9ES (GB)
(74) Mandataire: Claisse, John Anthony, Dr.
(86) Numéro de dépôt international: BE9700008
(87) Numéro de publication internationale: WO9727064

(56) Documents cités:
- EP-A- 0 142 331
- EP-A- 0 410 051
- DE-C- 4 132 484
- FR-A- 1 381 607
- US-A- 3 552 986
- US-A- 4 564 580
- PATENT ABSTRACTS OF JAPAN vol. 012, no. 098 (M-680), 31 Mars 1988 & JP 62 233294 A (NIPPON KOGAKU KK), 13 Octobre 1987,
- PATENT ABSTRACTS OF JAPAN vol. 013, no. 177 (M-818), 26 Avril 1989 & JP 01 005887 A (DAINIPPON PRINTING CO LTD), 10 Janvier 1989,

## Description

La présente invention concerne un film imprimable amélioré possédant de bonnes propriétés d'adhésion de l'encre et concerne plus particulièrement, un film imprimable amélioré possédant de bonnes propriétés d'adhésion lorsqu'il est employé avec une encre durcissable par rayonnement.

Ces dernières années, la diversification des produits imprimés a requis l'impression d'une plus large variété de matériaux en feuilles; par exemple, les papiers, les papiers synthétiques, les films polymères comme les films en résine thermoplastique, les feuilles métalliques, les feuillets métallisés, etc. Ces articles imprimés sont imprimés par des méthodes comme l'impression offset, la gravure, la flexographie, l'impression par sérigraphie et l'impression typographique. Dans ces procédés d'impression, un procédé utilisant l'encre durcissable par rayonnement est récemment devenu populaire, car les encres durcissables par rayonnement durcissent rapidement, et le procédé d'impression qui emploie l'encre durcissable par rayonnement est plus aisé à mettre en oeuvre. Les encres durcissables par rayonnement sont réputées utiles dans l'impression d'emballages, d'étiquettes et de matériaux d'impression non absorbants. Les encres durcissables par rayonnement contiennent typiquement des acrylates insaturés, des polyesters, des photoinitiateurs et des additifs. Dans les encres durcies par faisceau d'électrons, cependant, les photoinitiateurs peuvent être omis.

Après dépôt de l'encre durcissable par rayonnement sur l'article à imprimer, l'épreuve est exposée au rayonnement et durcit en une fraction de seconde. Des vitesses d'impression jusque 300 m/min. sont atteintes durant une impression en continu. A présent, il existe une grande demande pour des articles imprimables en feuilles.

Dans les procédés d'impression, la feuille à imprimer doit posséder des propriétés de glissement, des propriétés antibloquantes, produire un étalement uniforme de l'encre sur la surface de la feuille, aussi bien que posséder des propriétés antistatiques. A côté de ces propriétés généralement requises, dans les procédés d'impression qui emploient de l'encre durcissable par rayonnement, la feuille à imprimer doit présenter en particulier, une forte propriété d'adhésion de l'encre durcie par rayonnement.

En particulier, les films en polymère imprimés avec de l'encre durcissable par rayonnement, destinés à être employés comme étiquettes, par exemple dans le marché de l'étiquetage des bouteilles, doivent être résistants à la fois aux conditions de congélation (entre autres lors de l'entreposage dans des réfrigérateurs ou des bacs à glace pendant 24 heures) et d'ébullition (entre autres lors de la pasteurisation par immersion dans l'eau à 95°C pendant jusqu'à 1 heure).

La demande de brevet EP-A1-410051 divulgue des feuilles pour impression comprenant une couche support et une couche de surface sur au moins une face dudit support, ladite couche de surface contenant au moins un polymère à base d' acrylate et un composé insaturé (l'acide cinnamique ou ses dérivés).

Ni ce document, ni les autres documents de l'état de la technique ne donnent une indication concernant la possibilité d'emploi d'autres monomères pour remplacer l'acide cinnamique.

Cependant, les matériaux en feuilles énumérés ci-dessus, particulièrement les films de polymère, n'adhèrent pas suffisamment à l'entre durcissable par rayonnement après impression et durcissement, particulièrement dans ces conditions extrêmes. Par conséquent, l'encre imprimée et durcie par rayonnement connaît le problème qui réside dans le fait que l'encre imprimée et durcie par rayonnement se sépare du film de polymère.

Dès lors, un film imprimable possédant une adhésion supérieure à l'encre durcissable par rayonnement, même dans des conditions extrêmes, serait très utile.

La présente invention consciente des problèmes décrits ci-dessus, a pour objet, par conséquent, de fournir un film imprimable, en particulier un film de polymère imprimable, qui a les propiétés supérieures requises pour les films imprimables, et en particulier, possède une propiété d'adhésion supérieure vis-à-vis de l'encre durcissable par rayonnement.

Par conséquent, la présente invention fournit un film imprimable comprenant un substrat et au moins une couche superficielle qui ouvre au moins une face du substrat et qui comprend un polymère dispersable dans l'eau et un composé éthyléniquement insaturé.

Les substrats appropriés, qui peuvent être employés dans la présente invention, sont les films de polymère, spécialement les films de polyoléfine, les papiers, les papiers synthétiques, les textiles tissés, les textiles non tissés, les feuilles de céramique, les plaques métalliques et les feuilles composites multicouches formées par combinaison desdits matériaux. Pour les films imprimables destinés à être employés comme étiquettes, les films de polyoléfine sont préférés, particulièrement les films en polypropylène orienté et avec avantage un film en polypropylène orienté selon la demande de brevet européen 202 812.

Dans la présente description, l'expression "film imprimable" désigne un film que l'on peut directement encrer, c'est-à-dire un film dont la couche superficielle est suffisamment solide pour résister à la traction de l'encre qui sèche, sinon des portions de la couche superficielle peuvent être arrachées de la surface, provoquant des défauts appelés piqûres.

L' expression "au moins une couche superficielle" désigne une couche qui recouvre au moins une face d'un substrat indiqué ci-avant. Cette couche superficielle comprend un polymère dispersable dans l'eau, comme par exemple un polymère acrylique ou uréthanne dispersable dans l'eau. Dans la présente description, un "polymère acrylique" signifie un (co)polymère obtenu par la polymérisation par addition radicalaire d'au moins un monomère du type (méth)acrylique et optionnellement, d'autres composés vinyliques ou allyliques. Il est essentiel que ce polymère acrylique soit capable de produire une surface de film sous forme lisse et raisonnablement ouverte.

Une grande variété de polymères acryliques sont capables de remplir cette condition. Des polymères acryliques adéquates sont les homopolymères de l'acide (méth)acrylique ou du (méth)acrylate d'alkyle, le radical alkyle comptant de 1 à 10 atomes de carbone, ou des copolymères de deux (ou plus) monomères dudit type (méth)acrylique et, optionnellement, d'autres composés vinyliques ou allyliques.

Comme expliqué ci-dessus, un polymère d'uréthanne dispersable dans l'eau peut également convenir. Comme le polymère acrylique, il est essentiel que ce polymère d'uréthanne soit capable de produire une surface de film sous forme lisse et raisonnablement ouverte.

Une grande variété de polymères d'uréthanne sont capables de remplir cette condition. Des polymères d'uréthanne adéquats sont, par exemple, le produit de la réaction d'un prépolymère de polyuréthanne terminé par un isocyanate, formé par réaction d'au moins un excès d'un polyisocyanate organique, d'un composé organique contenant au moins deux groupes réagissant avec les isocyanates et d'un composé réagissant avec les isocyanates contenant des groupes fonctionnels sel anionique (ou des groupes acides qui peuvent par la suite être convertis en de tels groupes sel anionique) ou des groupes non ioniques et un extenseur de chaîne contenant de l'hydrogène actif.

La couche superficielle comprend aussi un composé éthyléniquement insaturé. Le composé éthyléniquement insaturé est choisi pour sa miscibilité dans la phase aqueuse à l'état humide et pour sa compatibilité à l'état sec avec le polymère dispersable dans l'eau lui-même. Par conséquent, le compose éthyléniquement insaturé joue le rôle d'un plastifiant pour la couche superficielle une fois durcie, permettant une pénétration aisée dans celle-ci de l'encre durcissable par rayonnement.

Le composé éthyléniquement insaturé doit également être capable, lorsque le film imprimable est soumis au rayonnement afin de durcir l'encre, de réagir avec les composés insaturés de l'encre qui a pénétré dans la couche superficielle.

Cette réaction entre les composés éthyléniquement insaturés de la couche superficielle et les composés insaturés de l'encre durcissable par rayonnement forme des liaisons chimiques entre ces composés et, en même temps, réticule la couche superficielle, générant ainsi le produit résistant final.

Le composé éthyléniquement insaturé contient de préférence de 1 à 10 liaisons éthyléniques par molécule et avec avantage de 2 à 5 liaisons éthyléniques par molécule.

Les composés éthyléniquement insaturés adéquats sont les dérivés ester d'acides α,β-éthyléniquement insaturés, comme les acides acrylique ou méthacrylique, les acides itaconique ou citraconique, les acides maléique ou fumarique, etc., avec des polyols ou des polyols alkoxylés.

Les polyols adéquats comprennent des diols aliphatiques saturés comme l'éthylèneglycol, le diéthylèneglycol, le triéthylèneglycol, le propylèneglycol, le dipropylèneglycol, le tripropylèneglycol, les butylèneglycols, le néopentylglycol, les 1,3- et 1,4-butanediols, le 1,5-pentanediol, le 1,6-hexanediol et le 2-méthyl-1,3-propanediol. Le glycérol, le 1,1,1-triméthylolpropane, le bisphénol A et ses dérivés hydrogénés peuvent également être employés.

Les polyols alkoxylés adéquats comprennent les dérivés éthoxylés ou propoxylés des polyols énumérés ci-dessus.

Des exemples de composés éthyléniquement insaturés qui peuvent être utilisés suivant l'invention sont des acrylates polyfonctionnels comme des acrylates difonctionnels, comme le diacrylate de 1,4-butanediol, le diacrylate de 1,6-hexanediol, le diacrylate de néopentylglycol, le diacrylate de triéthylèneglycol, le diacrylate de polyéthylèneglycol, le diacrylate de tripropylèneglycol, le diacrylate de 2,2-dionol, le diacrylate de bisphénol A, etc., des acrylates trifonctionnels comme le triacrylate de pentaérythritol, le triacrylate de triméthylolpropane, etc., des acrylates tétrafonctionnels, etc.

Il est bien entendu que les dérivés du méthacrylate correspondant à ces dérivés de l'acrylate peuvent également être utilisés.

De plus, il a été observé que des dérivés polyallyliques comme le tétraallyloxyéthane conviennent également. Le triacrylate de triméthylolpropane éthoxylé (EBECRYL 1160 de UCB CHEMICALS) est employé préférentiellement.

La quantité du composé éthyléniquement insaturé peut être d'environ 2 à environ 90% en poids du polymère acrylique, et est de préférence, d'environ 2 à environ 15% (dans la présente description, tous les pourcentages sont basés sur le poids sec).

En vue d'améliorer la dureté et/ou la résistance à l'eau de la couche superficielle déposée sur le film et, par conséquent, du produit fini, un agent de réticulation peut être utilement ajouté à la couche superficielle. Il faut cependant noter qu'un tel agent de réticulation doit être choisi de telle façon que la couche superficielle, une fois durcie, permette une pénétration aisée de l'encre durcissable par rayonnement dans celle-ci.

Les ligands de métaux de coordination, oui peuvent former des structures coordonnées stables avec des fonctions carboxy ou carbonyle remplissent parfaitement cette condition. Le carbonate de zirconium et d'ammonium (stabilisé ou non) est particulièrement préféré. La quantité d'agent de réticulation peut s'élever jusqu'à 5% en poids du polymère acrylique, et est de préférence, entre 1 et 5% en poids du polymère acrylique.

La couche superficielle peut contenir tout autre agent additionnel, si nécessaire, pour prévenir le blocage d'une feuille sur une autre, et pour améliorer la propriété de glissement des feuilles, la propriété antistatique, la propriété de non-transparence, etc. Ces agents additionnels sont généralement ajoutés en une quantité totale ne dépassant pas environ 40% en poids du polymère acrylique. Comme dit agent additionnel, on peut utiliser, par exemple, un pigment comme l'oxyde de polyéthylène, la silice, le gel de silice, la craie, le talc, la terre de diatomées, le carbonate de calcium, le sulfate de calcium, le sulfate de baryum, le silicate d'aluminium, une zéolite synthétique, l'alumine, l'oxyde de zinc, l'oxyde de titane, la lithopone, le blanc satin, etc. et les agents antistatiques cationiques, anioniques et non ioniques, etc.

Selon la présente invention, la couche superficielle peut être appliquée sur le substrat, sous forme d'une dispersion aqueuse d'environ 0,5 à environ 2,5 g/m² par le procédé de l'enduction par cylindres, de l'enduction par lames, de l'enduction par pulvérisation, de l'enduction par lame d'air, de l'enduction par barreau, de la gravure inverse, etc., et ensuite séchée, par exemple dans un four à air chaud.

Après l'étape de séchage, la couche superficielle comprend donc le polymère dispersable dans l'eau, réticulé de manière uniforme par l'agent de réticulation et, inclus dans la matrice de polymère acrylique, le composé éthyléniquement insaturé.

Comme expliqué ci-dessus, cela permet une pénétration aisée de l'encre durcissable par rayonnement dans la couche superficielle ainsi que sa réaction ultérieure avec le composé éthyléniquement insaturé.

Avant d'appliquer la couche superficielle, la surface du substrat peut être préalablement traitée de façon classique en vue d'améliorer son adhérence. Pour cet usage, il est, par exemple, possible de prétraiter le substrat par effet corona, mais il est bien entendu que tous les procédés connus visant à améliorer la surface d'un article en feuilles en vue de l'application d'une préparation, peuvent convenir.

Il a été observé que, dans certains cas, la couche superficielle dont il est question ici n'adhère pas bien aux surfaces des films, même lorsque ces derniers ont été soumis à des opérations bien connues de prétraitement comme, par exemple, le traitement par décharge corona, par flamme, ou par produits chimiques oxydants. Il a été observé, cependant, que l'emploi de couches primaires intermédiaires entre le substrat et la couche superficielle permet d'obtenir un haut niveau d'adhérence.

En effet, lors de l'application de la couche d'enduction sur un substrat de film de polyoléfine, il est généralement préférable d'appliquer d'abord une couche primaire intermédiaire, ou couche d' ancrage de l'enduction, sur le substrat, pour assurer une adhésion adéquate entre le substrat et la couche d'enduction appliquée ultérieurement. Bien qu'un film suivant l'invention puisse en soi être utilisé comme un tel substrat (par exemple, un film imprimable selon l'invention sans couche primaire est capable de résister à la congélation), il est préférable d'utiliser comme substrat pour une couche superficielle appliquée ultérieurement, un film sur la ou les surfaces duquel une couche d'enduction primaire ou d'ancrage a été appliquée.

Le film comprend donc en outre, avec avantage, une couche primaire entre le substrat et la ou les couches superficielles.

On peut citer les primaires de polyéthylèneimine ou d'acrylate de polyuréthanne, réticulées par dérivés isocyanate, époxy, aziridine ou silane comme exemples de primaires adéquats.

La résine primaire peut être appliquée par des techniques d'enduction classiques - par exemple, par un procédé de couchage par cylindre gravé. La résine est commodément appliquée sous forme d'une dispersion ou d'une solution. Il serait économiquement préférable d'appliquer la résine sous forme d'une dispersion dans l'eau. Les techniques de dispersion aqueuse ont l'avantage supplémentaire de ne pas donner lieu à des odeurs résiduelles dues au solvant présent, ce qui est généralement le cas lors de l'emploi de solvants organiques. Cependant, lors de l'emploi de techniques en phase aqueuse, il est généralement nécessaire pour sécher l'agent dispersant de chauffer le film à des températures plus élevées que dans les systèmes utilisant un solvant organique ou un dispersant. De plus, la présence d'un tensioactif, qui est généralement utilisé pour améliorer la dispersion du revêtement dans l'eau, a tendance à réduire l'adhésion de la résine sur le film de base. Il est donc également possible d'appliquer la résine à partir d'un solvant ou dispersant organique. Des exemples de solvants organiques acceptables comprennent les alcools, les solvants hydrocarbonés aromatiques, comme le xylène, ou des mélanges de ces solvants si nécessaire.

Une autre face du substrat, à savoir une face qui n'est pas couverte par la couche superficielle, peut être recouverte d'une couche adhésive sensible à la pression, qui consiste en un agent adhésif sensible à la pression couramment utilisé. De plus, si nécessaire, un film ou un feuillet, contenant un agent de séparation, peut couvrir la couche adhésive sensible à la pression. Ce laminât, comprenant la feuille imprimable selon l'invention, peut être employé comme étiquette collante pouvant être apposée sur la plupart des surfaces.

Un autre aspect de l'invention concerne donc un film imprimable conçu pour des étiquettes, comprenant un substrat dont une seule face est enduite d'une couche superficielle et dont l'autre face est enduite d'une couche adhésive sensible à la pression qui est elle-même recouverte d'un film ou d'une feuille de séparation.

Un autre aspect de la présente invention décrit un procédé de fabrication d'un film imprimable, comprenant l'étape d'enduction d'au moins un côté d'un substrat avec une dispersion aqueuse comprenant un polymère dispersable dans l'eau et un composé éthyléniquement insaturé, et optionnellement un agent de réticulation et/ou des additifs classiques, et comprenant ensuite l'étape de séchage du revêtement ainsi obtenu.

Le procédé de fabrication d'un film imprimable comprend avantageusement, avant l'étape d'enduction d'au moins une face du substrat, une étape de prétraitement supplémentaire du substrat (comme un traitement par décharge corona), et encore plus avantageusement, une étape de dépôt sur le substrat d'une couche primaire.

Dans une forme de réalisation particulière, orientée vers la préparation d'étiquettes, une seule face dudit substrat est enduite d'une couche superficielle, et le substrat enduit sur une face ainsi obtenu est enduit d'un adhésif sensible à la pression, ou, dans une variante, l'adhésif sensible à la pression peut être transféré d'une doublure de séparation avec laquelle le substrat enduit est combiné.

Un autre objet de la présente invention concerne un film imprimé comprenant un substrat dont au moins une face est enduite d'une couche superficielle comprenant un polymère dispersable dans l'eau et un composé éthyléniquement insaturé, ladite face enduite du substrat étant imprimée par des procédés classiques comme l'impression offset, la gravure, la flexographie, la sérigraphie et la typographie, utilisant l'encre durcissable par rayonnement et ultérieurement, durcie par rayonnement.

Les formulations des encres durcissables par rayonnement contiennent généralement des pigments, un véhicule, un solvant et des additifs. Les solvants dans ces systèmes sont des monomères de faible viscosité, capables de réagir eux-mêmes (c'est-à-dire employés comme diluants réactifs). Le véhicule est habituellement composé d'une résine dérivée de monomères insaturés, de prépolymères ou d'oligomères, tels que des dérivés d'acrylates qui sont capables de réagir avec le composé éthyléniquement insaturé de la couche superficielle. Pour une encre UV, les "additifs" contiennent une grande quantité de photoinitiateurs qui répondent aux photons de la lumière UV pour démarrer la réaction du système.

Une formulation d'encre UV peut être généralisée comme suit:
- pigment: 15-20%
- prépolymères: 20-35%
- véhicule: 10-25%
- photoinitiateurs: 2-10%
- autres additifs: 1-5% .

Pour une encre durcissable par faisceau d' électrons, les "additifs" ne comprennent généralement pas de photoinitiateur.

Les monomères de faible viscosité, parfois appelés diluants, sont capables de réagir chimiquement, ce qui les amène à se retrouver entièrement incorporés dans la matrice polymérique finale.

Le véhicule fournit la portion de "résine dure" de la formulation. Typiquement, ils sont dérivés de résines synthétiques comme, par exemple, les uréthannes, les époxydes, les polyesters modifiés par réaction avec des composés portant des groupes éthyléniques, comme par exemple l'acide (méth)acrylique, le (méth)acrylate d'hydroxyéthyle, le produit de la réaction de la caprolactone avec des composés insaturés portant un groupe hydroxyle, et les produits semblables.

Des ajustements appropriés peuvent être faits lors de la sélection des prépolymères et des monomères employés, dans le but d'obtenir les viscosités requises pour les différents procédés d'application.

Un autre aspect de l'invention porte sur un procédé de fabrication d'un film imprimé comprenant les étapes de
a) enduction d'un substrat par une dispersion aqueuse comprenant un polymère dispersable dans l'eau et un composé éthyléniquement insaturé;
b) séchage du revêtement ainsi obtenu;
c) encrage du revêtement séché par l'encre durcissable par rayonnement;
d) durcissement de l'encre par rayonnements UV ou faisceau d'électrons.

Il est à noter que les différentes étapes de ce procédé peuvent être accomplies dans les mêmes conditions (vitesse, coûts, ...) que pour une couche superficielle classique.

Finalement, l'invention concerne également un film imprimé obtenu en encrant un film imprimable selon l'invention, et en particulier, une étiquette imprimée ainsi obtenue.

Les exemples suivants sont donnés dans le but d'illustrer la présente invention.

Dans ces exemples, la détermination de certaines valeurs caractéristiques a été menée en accord avec les procédés décrits ci-dessous.

L'adhésion de l'encre durcie par rayonnement au film dans des conditions d'ébullition (simulant la pasteurisation) est contrôlée selon les procédures suivantes:
A) Un bain-marie sous agitation est chauffé à 95°C. Une fois la température stabilisée, l'échantillon de film imprimé à tester est immergé dans l'eau. Après 45 minutes, l'échantillon est retiré du bain-marie et sa surface est grattée sous pression modérée avec une pièce tenue perpendiculairement à la surface de l'échantillon. La perte d'impression est rapportée comme "accepté" ou "rejeté", où "accepté" signifie qu'il n'y a pas de perte d'impression et "rejeté" signifie qu'il y a une perte significative d'impression.
B) L'échantillon est retiré du bain-marie à 95°C après 45 minutes comme décrit en A.

Une bande adhésive est appliquée sur l'échantillon puis rapidement enlevée. De cette façon, les propriétés de l'encre imprimée sur la feuille à imprimer sont observées.

Le pourcentage de la surface d'encre enlevée (estimation visuelle) est noté.

L'adhésion au film de l'encre durcissable par rayonnement dans des conditions de congélation (simulant l'immersion dans un bac à glace) est contrôlée selon la procédure suivante.

Un bain-marie contenant un mélange d'eau et de glace (50:50) est refroidi à 0°C. Une fois la température stabilisée, l'échantillon de film imprimé à tester est immergé dans l'eau.

Après 24 heures, l'échantillon est retiré du bain-marie et sa surface grattée sous pression modérée avec une pièce tenue perpendiculairement à la surface de l'échantillon. La perte d'impression est notée "accepté" ou "rejeté" comme décrit ci-dessus.

### EXEMPLE 1.

Un film de polypropylène, traité par décharge corona, de 50 µm d'épaisseur, reçoit sur une face une couche primaire à 0,2 g/m² d'acrylate de polyuréthanne auquel on ajoute un réticulant isocyanate avant enduction. La face du substrat ayant reçu la couche primaire est ensuite recouverte, à 1,0 g/m² et par gravure inverse, d'une dispersion aqueuse contenant 21,0 kg d'un polyuréthanne à base de polyester aliphatique (DAOTAN VTW 1238 de HOECHST; teneur en solide 50%), représentant 80,8% (en poids sec) de la dispersion aqueuse, 0,9 kg de diacrylate de tripropylèneglycol (teneur en solide 100%; 7% (en poids sec) de la dispersion aqueuse), 1,1 kg de carbonate d'ammonium et de zirconium (teneur en solide 20%; 1,7% (en poids sec) de la dispersion aqueuse), 4,3 kg de silice colloïdale (LUDOX HS40 de DU PONT; teneur en solide 30%; 10% (en poids sec) de la dispersion aqueuse) et 0,65 kg de gel de silice comme agent antibloquant (GASIL HP 250 de CROSFIELD; teneur en solide 10%; 0,5% (en poids sec) de la dispersion aqueuse).

Le film enduit est ensuite séché dans un four à air chaud.

Le film enduit ainsi obtenu est ensuite imprimé par un sérigraphie avec une encre de la série RSP (de NORCOTE), à 12 g/m².

Le film imprimé ainsi obtenu est ensuite durci aux UV au moyen d'une lampe à vapeur de mercure à moyenne pression (120 W/cm) à 12,2 m/min. Le film imprimé finalement obtenu est testé selon la procédure décrite ci-dessus. Les résultats sont donnés dans le tableau 1.

### EXEMPLE COMPARATIF A.

Un film en polypropylène traité par décharge corona (mais sans couche primaire), de 50 µm d'épaisseur, est imprimé puis durci comme décrit dans l'exemple 1. Le film imprimé finalement obtenu est testé selon le procédé décrit ci-dessus. Les résultats sont donnés dans le tableau 1.

### EXEMPLE COMPARATIF B.

Un film imprimé est préparé exactement comme décrit dans l'exemple 1, sauf que la dispersion aqueuse ne contient pas de diacrylate de tripropylèneglycol.

Le film imprimé finalement obtenu est testé selon le procédé décrit ci-dessus. Les résultats sont donnés dans le tableau 1.

**TABLEAU 1**

| Exemple | Conditions d'ébullition | | Conditions de congélation |
|---|---|---|---|
| | Test de grattage | % d'encre enlevée | Test de grattage |
| 1 | accepté | 0% | accepté |
| A* | refusé | 95% | refusé |
| B* | refusé | 60% | refusé |

| | | | |
|---|---|---|---|
| * à titre de comparaison | | | |

Ces résultats montrent que le film imprimable selon l'invention possède des propriétés très intéressantes en ce qui concerne l'adhésion de l'encre durcissable par rayonnement sur le substrat. En particulier, l'influence de la présence de la couche superficielle ressort de la comparaison entre les exemples A et B, et l'influence du composé éthyléniquement insaturé ressort de la comparaison entre les exemples B et 1.

### EXEMPLE 2.

Un film imprimé est préparé exactement comme décrit dans l'exemple 1, sauf que le composé éthyléniquement insaturé est remplacé par du triacrylate de triméthylolpropane éthoxylé (EBECRYL 1160 d'UCB S.A.).

### EXEMPLE 3.

Un film imprimé est préparé exactement comme décrit dans l'exemple 1, sauf que le polymère d' uréthanne est remplacé par un polymère acrylique anionique (NEOCRYL XK-90 de ZENECA).

### EXEMPLES 4 à 6.

Des films imprimés sont préparés exactement comme décrit dans l'exemple 2, sauf que le polymère d'uréthanne est remplacé, respectivement, par un polymère acrylique anionique (NEOCRYL XK-90 de ZENECA) (exemple 4), un copolymère de styrène et d'acrylique (GLASCOL LE 31 d'ALLIED COLLOIDS) (exemple 5) et un autre polymère acrylique anionique (NEOTAC A-572 de ZENECA) (exemple 6).

Les films imprimés obtenus dans les exemples 2 à 6 sont testés selon le procédé décrit ci-dessus et les résultats sont donnés dans le tableau 2.

**TABLEAU 2**

| Exemple | Conditions d'ébullition | | Conditions de congélation |
|---|---|---|---|
| | Test de grattage | % d'encre enlevée | Test de grattage |
| 2 | accepté | 0 | accepté |
| 3 | accepté | 0 | accepté |
| 4 | accepte | 0 | accepté |
| 5 | accepté | 0 | accepté |
| 6 | accepte | 0 | accepté |

Ces résultats montrent qu'une grande variété de couches superficielles et de composés éthyléniquement insaturés peuvent être utilisés.

## Revendications

1. Film imprimable comprenant un substrat et au moins une couche superficielle, ladite couche recouvrant au moins une face dudit substrat et consistant essentiellement en 10 à 98% en poids d'un polymère dispersable dans l'eau et capable de produire une surface de film sous forme lisse et raisonnablement ouverte, et 2 à 90% en poids d'un composé éthyléniquement insaturé, sélectionné parmi les acrylates polyfonctionnels résultant de l'estérification d'un polyol par l'acide (méth)acrylique ou des dérivés polyallyliques, ladite couche superficielle ne contenant pas de photoinitiateur de polymérisation par addition.

2. Film imprimable selon le revendication 1, caractérisé en ce que le substrat est sélectionné parmi le groupe comprenant les films de polymère, les films de polyoléfine, les papiers, les papiers synthétiques, les textiles tissés, les textiles non-tissés, les feuilles de céramique, les feuilles en fibre métallique, les feuilles (films) métallisé(e)s, les lames métalliques, les plaques métalliques, et les feuilles composites multicouches formées par combinaison desdits matériaux.

3. Film imprimable selon la revendication 2, caractérisé en ce que le substrat est un film de polypropylène orienté.

4. Film imprimable selon l'une quelconque des revendications 1 à 3, caractérisé en ce que le polymère dispersable dans l'eau consiste essentiellement en un homopolymère d'acide (méth)acrylique et de (méth)acrylate d'alkyle, le radical alkyle comprenant de 1 à 10 atomes de carbone, ou un copolymère de deux ou davantage desdits monomères, ou optionnellement d'autres composés vinyliques ou allyliques.

5. Film imprimable selon l'une quelconque des revendications 1 à 3, caractérisé en ce que le polymère dispersable dans l'eau est un polymère d'uréthanne ou d'acrylate d'uréthanne.

6. Film imprimable selon l'une quelconque des revendications 1 à 5, caractérisé en ce que ladite couche superficielle comprend en outre un agent de réticulation en une quantité allant de 1 à 5% en poids du polymère dispersable dans l'eau.

7. Film imprimable selon l'une quelconque des revendications 1 à 6, comprenant en outre, entre ledit substrat et ladite ou lesdites couches superficielles, une couche primaire.

8. Film imprimable selon l'une quelconque des revendications 1 à 7, caractérisé en ce qu'une seule face est enduite d'une couche superficielle et en ce que l'autre face du substrat est recouverte d'une couche adhésive sensible à la pression.

9. Procédé de fabrication d'un film imprimable selon l'une quelconque des revendications 1 à 8, comprenant l'étape d'enduction d'au moins une face du substrat par une dispersion aqueuse comprenant le polymère dispersable dans l'eau et le composé éthyléniquement insaturé, et comprenant en outre l'étape de séchage du revêtement ainsi obtenu.

10. Procédé selon la revendication 9, caractérisé en ce que la dispersion aqueuse comprend de plus un agent de réticulation.

11. Procédé selon l'une quelconque des revendications 9 ou 10, caractérisé en ce qu'il comprend une étape supplémentaire de dépôt d'une couche primaire sur le substrat, avant l'application de ladite dispersion aqueuse.

12. Procédé de fabrication d'un film imprimé, com prenant les étapes de
a) enduction d'un substrat par une dispersion aqueuse comprenant un polymère dispersable dans l'eau capable de produire une surface de film sous forme lisse et raisonnablement ouverte et un composé éthyléniquement insaturé, sélectionné parmi les acrylates polyfonctionnels résultant de l'estérification d'un polyol par l'acide (méth)acrylique ou des dérivés polyallyliques, ladite dispersion ne contenant pas de photoinitiateur de polymérisation par addition;
b) séchage du revêtement ainsi obtenu;
c) encrage du revêtement séché avec une encre durcissable par rayonnement;
d) durcissage de l'encre par un rayonnement UV ou un faisceau d'électrons.

13. Film imprimé obtenu par encrage d'un film imprimable selon l'une quelconque des revendications 1 à 8, au moyen d'une encre durcissable par rayonnement et par durcissage de ladite encre au moyen de rayonnements.

14. Etiquette obtenu par encrage d'un film imprimable selon la revendication 8, au moyen d'une encre durcissable par rayonnement et par durcissage de ladite encre au moyen de rayonnements, ledit film étant combiné avant ou après l'impression, à une couche d'adhésif sensible à la pression et à un film détachable.

15. Récipient, en particulier une boutelle, étiquetée au moyen d'une étiquette selon la revendication 14.

## Claims

1. Printable film comprising a substrate and at least one surface layer, said layer covering at least one face of said substrate and consisting essentially of 10 to 98 % by weight of a water-dispersible polymer able to provide a smooth-film formed and reasonably open surface and 2 to 90 % in weight of an ethylenically unsaturated compound selected from polyfunctional acrylates resulting from the esterification of a polyol with (meth)acrylic acid or polyallyl derivatives, said surface layer not containing an addition polymerisation photoinitiator.

2. Printable film according to claim 1, characterised in that the substrate is selected from the group consisting of polymeric films, polyolefin films, papers, synthetic papers, woven fabrics, nonwoven fabrics, ceramic sheets, metallic fibre sheets, metallized sheets (films), metallic strips, metallic sheets, and multilayer composite sheets formed by combination of said materials.

3. Printable film according to claim 2, characterised in that the substrate is an oriented polypropylene film.

4. Printable film according to any one of claims 1 to 3, characterised in that the water dispersible polymer consists essentially of a homopolymer of (meth)acrylic or alkyl (meth)acrylate, the alkyl radical having 1 to 10 carbon atoms, or a copolymer of two or more of said monomers, or optionally of other vinylic or allylic compounds.

5. Printable film according to any one of claims 1 to 3, characterised in that the water dispersible polymer is a urethane or urethane acrylate polymer.

6. Printable film according to any one of claims 1 to 5, characterised in that said surface layer further comprises a crosslinking agent in an amount of from 1 to 5 % by weight of the water dispersible polymer.

7. Printable film according to any one of claims 1 to 6, further comprising a primer layer between said substrate and said surface layer(s).

8. Printable film according to any one of claims 1 to 7, characterised in that only one face is coated with a surface layer and in that the reverse face of the substrate is covered with a pressure-sensitive adhesive layer.

9. Process for the manufacture of a printable film according to any one of claims 1 to 8, comprising the step of coating at least one side of the substrate with an aqueous dispersion comprising the water dispersible polymer and the ethylenically unsaturated compound, and further comprising the step of drying the coating so obtained.

10. Process according to claim 9, characterised in that the aqueous dispersion further comprises a cross-linking agent.

11. Process according to either one of claims 9 and 10, characterised in that it comprises a further step of priming of the substrate before applying said aqueous dispersion.

12. Process for the manufacture of a film comprising the steps of
a) coating a substrate with an aqueous dispersion comprising a water dispersible polymer able to provide a smooth-film formed and reasonably open surface and an ethylenically unsaturated compound selected from polyfunctional acrylates resulting from the esterification of a polyol with (meth)acrylic or polyallyl derivatives, said surface layer not containing an addition polymerisation photoinitiator;
b) drying the coating so obtained;
c) inking the dried coating with a radiation curable ink;
d) curing the ink with UV radiation or an electron beam.

13. Printed film obtained by inking a printable film according to any one of claims 1 to 8 by means of a radiation curable ink and by curing the said ink by means of radiation.

14. Label obtained by inking a printable film according to claim 8 with a radiation curable ink and curing of said ink with radiation, said film being combined before or after printing with a pressure sensitive adhesive layer and a release film.

15. Container, in particular a bottle, labelled with a label according to claim 14.

## Patentansprüche

1. Bedruckbarer Film, der ein Substrat und wenigstens eine Oberflächenschicht umfaßt, wobei besagte Schicht wenigstens eine Seite besagten Substrats bedeckt und im wesentlichen aus 10 bis 98 Gew.-% eines Polymers, das in Wasser dispergierbar ist und das in der Lage ist, eine Filmoberfläche in glatter und mäßig offener Form zu erzeugen, und aus 2 bis 90 Gew.-% einer ethylenisch ungesättigten Verbindung, die unter den polyfunktionellen Acrylaten, die aus der Veresterung eines Polyols durch (Meth)acrylsäure resultieren, oder Polyallylderivaten ausgewählt ist, besteht, wobei besagte Oberflachenschicht keinen Polymerisationsphotoinitiator durch Zugabe enthält.

2. Bedruckbarer Film gemäß Anspruch 1, dadurch gekennzeichnet, daß das Substrat aus der Gruppe ausgewählt ist, die die Polymerfilme, die Polyolefinfilme, die Papiere, die synthetischen Papiere, die gewebten Textilien, die nichtgewebten Textilien, die Keramikfolien, die Folien aus Metallfasern, die metallisierten Folien (Filme), die Metallklingen, die Metallplatten und die mehrschichtigen Verbundfolien, die durch Kombination besagter Materialien gebildet werden, umfaßt.

3. Bedruckbarer Film gemäß Anspruch 2, dadurch gekennzeichnet, daß das Substrat ein Film aus orientiertem Polypropylen ist.

4. Bedruckbarer Film gemäß einem der Ansprüche 1 bis 3, dadurch gekennzeichnet, daß das in Wasser dispergierbare Polymer im wesentlichen aus einem Homopolymer von (Meth)acrylsäure oder Alkyl(meth)acrylat, wobei der Alkylrest 1 bis 10 Kohlenstoffatome umfaßt, oder einem Copolymer von zwei oder mehr der besagten Monomere oder gegebenenfalls von anderen Vinyl- oder Allylverbindungen besteht.

5. Bedruckbarer Film gemäß einem der Ansprüche 1 bis 3, dadurch gekennzeichnet, daß das in Wasser dispergierbare Polymer ein Urethan- oder Urethanacrylatpolymer ist.

6. Bedruckbarer Film gemäß einem der Ansprüche 1 bis 5, dadurch gekennzeichnet, daß besagte Oberflächenschicht außerdem ein Vernetzungsmittel in einer Menge, die von 1 bis 5 Gew.-% des in Wasser dispergierbaren Polymers geht, umfaßt.

7. Bedruckbarer Film gemäß einem der Ansprüche 1 bis 6, der außerdem zwischen besagtem Substrat und besagter oder besagten Oberflächenschichten eine Primärschicht umfaßt.

8. Bedruckbarer Film gemäß einem der Ansprüche 1 bis 7, dadurch gekennzeichnet, daß eine einzige Seite mit einer Oberflächenschicht überzogen ist, und dadurch, daß die andere Seite des Substrats mit einer druckempfindlichen Haftschicht bedeckt ist.

9. Verfahren zur Herstellung eines bedruckbaren Films gemäß einem der Ansprüche 1 bis 8, das den Schritt zum Einstreichen wenigstens einer Seite des Substrats mit einer wäßrigen Dispersion umfaßt, die das in Wasser dispergierbare Polymer und die ethylenisch ungesättigte Verbindung umfaßt, und das außerdem den Schritt zum Trocknen der so erhaltenen Beschichtung umfaßt.

10. Verfahren gemäß Anspruch 9, dadurch gekennzeichnet, daß die wäßrige Dispersion außerdem ein Vernetzungsmittel umfaßt.

11. Verfahren gemäß einem der Ansprüche 9 oder 10, dadurch gekennzeichnet, daß es vor dem Auftragen besagter wäßriger Dispersion einen zusätzlichen Schritt zur Abscheidung einer Primärschicht auf dem Substrat umfaßt.

12. Verfahren zur Herstellung eines bedruckten Films, das die Schritte umfaßt zum
a) Einstreichen eines Substrats mit einer wäßrigen Dispersion, die ein in Wasser dispergierbares Polymer, das in der Lage ist, einen Oberflächenfilm in glatter und mäßig offener Form zu erzeugen, und eine ethylenisch ungesättigte Verbindung umfaßt, die unter den polyfunktionellen Acrylaten, die aus der Veresterung eines Polyols mit (Meth)acrylsäure resultieren, oder Polyallylderivaten ausgewählt ist, wobei besagte Dispersion keinen Polymerisationsphotoinitiator durch Zugabe enthält;
b) Trocknen der so erhaltenen Beschichtung;
c) Einfärben der getrockneten Beschichtung mit einer strahlungshärtbaren Druckfarbe;
d) Aushärten der Druckfarbe durch eine UV-Strahlung oder einen Elektronenstrahl.

13. Bedruckter Film, der durch Einfärben eines bedruckbaren Films gemäß einem der Ansprüche 1 bis 8 mittels einer strahlungshärtbaren Druckfarbe und durch Aushärten besagter Druckfarbe mittels Strahlungen erhalten wird.

14. Etikett, das durch Einfärben eines bedruckbaren Films gemäß Anspruch 8 mittels einer strahlungshärtbaren Druckfarbe und durch Aushärten besagter Druckfarbe mittels Strahlungen erhalten wird, wobei besagter Film vor oder nach dem Bedrucken mit einer druckempfindlichen Haftschicht und einem ablösbaren Film kombiniert wird.

15. Behälter, insbesondere eine Flasche, die mit einem Etikett gemäß Anspruch 14 etikettiert ist.
